# EUROPEAN PATENT SPECIFICATION

(11) **EP 1 657 955 B1**
(45) Date of publication and mention of the grant of the patent: **30.01.2008**
(21) Application number: 04105820.7
(22) Date of filing: 16.11.2004
(51) Int. Cl.: H04R 1/28, H04R 1/02, H04M 1/03, H04M 1/19

(54) **Microphone coupler for a communication device**
Mikrofonkoppler für ein Kommunikationsgerät
Coupleur pour microphone pour un dispositif de communication

(43) Date of publication of application: 17.05.2006
(73) Proprietor: Research In Motion Limited, Waterloo, Ontario N2L 3W8 (CA)
(72) Inventor: Hawker, Larry, Waterloo, Ontario N2L 3W8 (CA); Rashish, Ilan, Waterloo, Ontario N2L 3W8 (CA); Phillips, Robert, Waterloo, Ontario N2L 3W8 (CA); Lowles, Robert, Waterloo, Ontario N2L 3W8 (CA)
(74) Representative: Rickard, David John

(56) References cited:
- EP-A- 0 275 996
- WO-A-20/06024134
- DE-A1- 10 201 312
- US-A- 5 832 079
- US-A- 5 915 015
- US-A- 6 108 416
- US-B1- 6 470 176

## Description

The invention relates to a microphone coupler for a voice communication device, in particular a coupler providing an air channel from the exterior of the device to a microphone located within the device.

In a voice communication device, a microphone and a speaker must be provided in order to allow a user to send and receive audio signals with another compatible device used by another person.

In a typical telephone, a handset is provided which is a shaped form having two transducers, e.g. a microphone and a speaker, positioned in a well-spaced relationship. Meanwhile, portable communication devices, such as cellular phones, have smaller and smaller form factors. Locating transducers in a cellular phone is a difficult task, because there are space restrictions on potential locations for the transducers and in certain confined spaces, the location of a transducer, such as a microphone, must be sufficiently isolated from signal interference generated from other devices within the phone. As such, in some instances a microphone may need to be placed at a location which is not especially close to the associated microphone port in the housing of the phone.
**[0003a]** DE10201312 discloses a sound reception device for a voice communication device. The reception device has a speech entry opening in a wall of the device coupled to a microphone via a sound entry passage. The microphone and the sound entry passage are located within the housing of the device.
[0003b] US6108416 discloses a communication device in which an internally located microphone is connected to the outside of the housing of the device by an acoustic path which opens to the outside of the device through one of the keys.
[0003c] US5832079 discloses a mobile telephone of the type having a pivotable flip element for covering the mobile telephone keyboard when not in use. Formed in the interior of the flip element is an acoustic horn for coupling acoustic energy to a microphone fixedly mounted to the mobile telephone housing. The acoustic horn communicates with the microphone via a rotary acoustic joint which forms one of the two pivot points by which the flip element is pivotably mounted to the housing.

None of the foregoing references addresses issues relating to positioning a microphone internal of a communication device housing whilst protecting it from signal interference generated from other devices within the phone.

There is a need for an arrangement which addresses such difficulties in the prior art.

WO2006/024134, published on 9^{th} March 2006 and applicable under Article 52 (3) and (4) EPC, discloses a mobile wireless communications device including a housing and circuit board in the housing and having radio frequency (RF) circuitry and a power amplifier and microphone mounted thereon. An antenna is carried within the housing and operative with the RF circuitry. An RF shield surrounds and isolates the microphone from the RF circuitry, power amplifier and antenna and shields the microphone from radiated energy generated from the RF circuitry, antenna or power amplifier.

### GENERAL

In a first aspect, a microphone coupler for a microphone located within a housing of a portable communication device is provided. The coupler comprises a body section having an interior cavity for accommodating at least a portion of said microphone and an RF shield can associated with said microphone, said body section having a port through a wall thereof, said port communicating with said interior cavity, said interior cavity being in communication with an opening of said microphone for receiving acoustic signals via an aperture in said RF shield can; and a conduit having an internal channel therein, a distal end, a proximal end, a first opening in said distal end connecting to said internal channel and a second opening in said proximal end connecting to said internal channel, wherein said proximal end of said conduit is connected to said body section with said second opening being in communication with said port; said distal end extending towards a microphone opening in said housing; and said conduit and said body section are formed as a single piece.

In the microphone coupler, the proximate end of the conduit may mate with a side wall of the body section.

In the microphone coupler, the conduit may have a longitudinal length of between 10 mm and 15 mm.

In the microphone coupler, there may be a support member connected to the conduit, which is attachable to a location within the housing to provide a brace for conduit.

In the microphone coupler, the coupler is comprised of a plastic material.

In a second aspect, a microphone coupler system for a communication device comprises: a printed circuit board (PCB); a microphone located on said PCB, said microphone having an opening to receive acoustic signals; an antenna for processing wireless communications handled by said device; a radio frequency (RF) shield can locatable over said microphone on said PCB for isolating said microphone from interference caused from signals associated with said antenna; and a microphone coupler for shielding said microphone from radio frequency (RF) signals in accordance with the first aspect of the invention.

In the system, there may be provided a gasket located between said opening of said microphone and said RF shield can.

In the system , there may be provided an RF seal having an opening therethrough, said RF seal covering said aperture of said RF shield can and holding said gasket in place about said opening of said microphone.

In the system, there may be provided a support member connected to said conduit and which is attachable to a location within said PCB to provide a brace for said conduit.

In the system, the PCB may comprise a microphone hole spanning from one side of said PCB to an opposite side of said PCB, said microphone and said RF shield may be located on said one side of said PCB; said opening on said microphone may be positioned to face said PCB about said microphone hole; and said conduit may be located on said other side of said PCB and said proximal end of said conduit may be in communication with said microphone hole on said PCB.

In a third aspect, there is provided a communication device incorporating the microphone coupler of the first aspect or the microphone coupler system of the second aspect of the invention.

In the device, the antenna may be located in a lower portion of said device and said conduit may span said antenna.

In the device, keypad devices may be located on an opposite side of said PCB to said microphone.

The device may further comprise a support member providing a brace for the conduit, where the support member is attached to a location within the housing at one end and is attached to the conduit at another end.

In other aspects various combinations of sets and subsets of the above aspects are provided.

### BRIEF DESCRIPTION OF DRAWINGS

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):
- Figure 1: is a block diagram of a communication device having a microphone and a microphone coupler according to an embodiment of the invention;
- Figure 2: is an exploded perspective view of aspects of an embodiment of a microphone coupler and its surrounding components according to the invention for the device of Fig. 1;
- Figure 3: is side cross-section view of the microphone and its surrounding components of the implementation of Fig. 2;
- Figure 4: is an exploded perspective view of aspects of an embodiment of a microphone coupler and its surrounding components for the device of Fig. 1; and
- Figure 5: is side cross-section view of the microphone and its surrounding components of the implementation of Fig. 4.

### DESCRIPTION OF PREFERRED EMBODIMENTS

The description which follows, and the embodiments described therein, are provided by way of illustration of an example, or examples, of particular embodiments of the principles of the present invention. These examples are provided for the purposes of explanation, and not limitation, of those principles and of the invention. In the description, which follows, like parts are marked throughout the specification and the drawings with the same respective reference numerals.

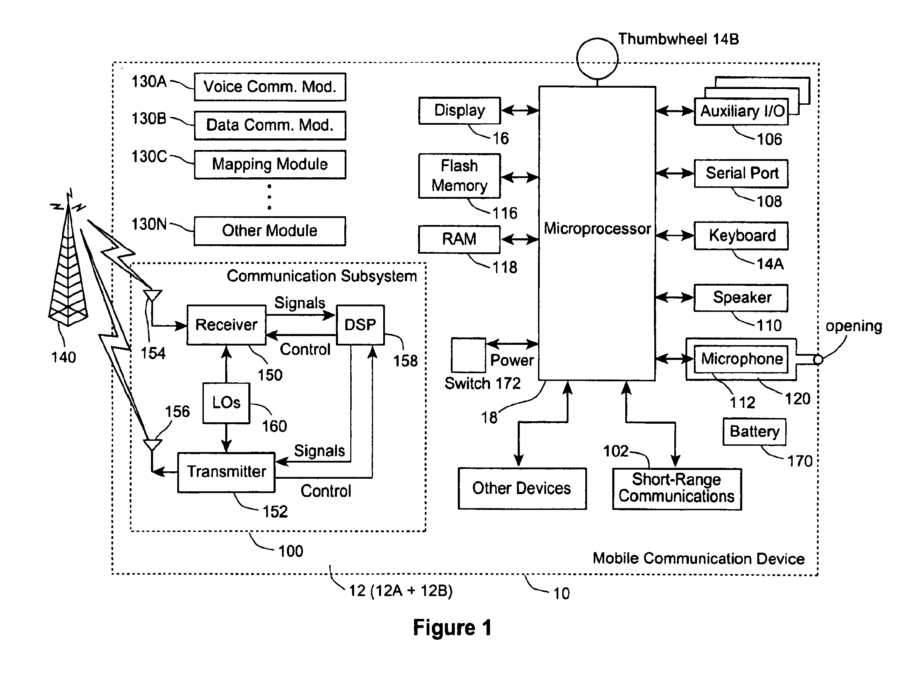

FIG. 1 schematically illustrates a handheld mobile communication device 10 and its components, including a housing 12, an input device (e.g. keyboard 14A or thumbwheel 14B) and an output device (a display 16), which is preferably a graphic Liquid Crystal Display (LCD), although other types of output devices may alternatively be utilized. Typically, housing 12 is a molded polycarbonate structure and may be formed via known plastic forming techniques. To assist in assembly of device 10, housing 12 typically comprises two or more pieces which fit together in a fitted arrangement to enclose the internal devices and form an exterior casing for device 10. For example, housing 12 may comprise an upper housing (12A) and a lower housing (12B). Physically for device 10, housing 12 may be elongated vertically, or may take on other sizes and shapes (including clamshell housing structures).

A processing device (a microprocessor 18) is shown schematically in FIG. 1 as coupled between keyboard 14A, thumbwheel 14B, display 16 and a series of other internal devices to device 10. For the purposes of the description, the term keypad and keyboard refers to both the exterior mechanical exposed key elements and the underlying switch and activation elements (e.g. elastomers, domes and contact regions). The microprocessor 18 controls the operation of the display 16, as well as the overall operation of the device 10, in response to actuation of keys on the keyboard 14A or thumbwheel 14B by a user. Exemplary microprocessors for microprocessor 18 include Data 950 (trade-mark) series microprocessors and the 6200 series microprocessor, both available from Intel Corporation.

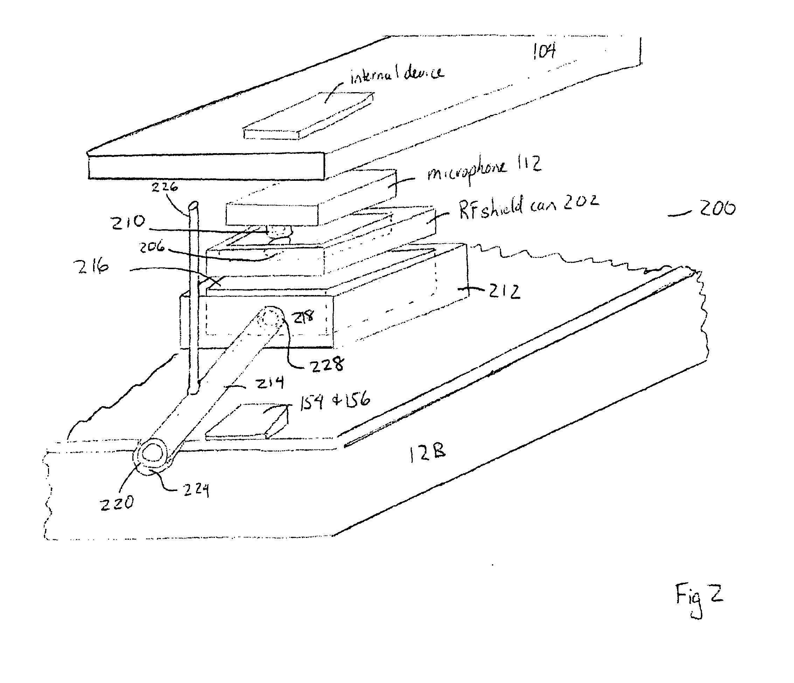

In addition to the microprocessor 18, other internal devices of the device 10 are shown schematically in FIG. 1. These devices include: a communication subsystem 100, a short-range communication subsystem 102, a set of auxiliary I/O devices 106, a serial port 108, a speaker 110 and a microphone 112. Memory for device 10 is provided in flash memory 116 and Random Access Memory (RAM) 118. Internal devices are enclosed within housing 12 and typically are either mounted onto a printed circuit board (PCB), affixed to an interior part of the housing or suspended by some means within housing 12. Microphone coupler 120 provides an acoustic chamber connecting microphone 112 from within device 10 to an opening (opening 224, Fig. 2) in the housing, thereby providing an air channel for microphone 112 to the ambient exterior surroundings of device 10. Aside from designed openings in coupler 120, preferably, coupler 120 provides a sealed, or mostly sealed, acoustic chamber.

The device 10 is preferably a two-way radio frequency (RF) communication device having voice and data communication capabilities. In addition, device 10 preferably has the capability to communicate with other computer systems via the Internet.

Operating system software executed by the microprocessor 18 is preferably stored in a computer readable medium, such as flash memory 116, but may be stored in other types of memory devices, such as read only memory (ROM) or similar storage element. In addition, system software, specific device applications, or parts thereof, may be temporarily loaded into a volatile store, such as RAM 118. Communication signals received by the mobile device may also be stored to RAM 118.

Microprocessor 18, in addition to its operating system functions, enables execution of software applications on device 10. A set of software applications that control basic device operations, such as a voice communication module 130A and a data communication module 130B, may be installed on the device 10 during manufacture or downloaded thereafter. Cell mapping module 130C may also be installed on device 10 during manufacture. As well, additional software modules, illustrated as an other software module 130N, which may be, for instance, a personal information manager (PIM) application, may be installed during manufacture or downloaded thereafter into device 10. PIM application is preferably capable of organizing and managing data items, such as e-mail messages, calendar events, voice mail messages, appointments, and task items. PIM application is also preferably capable of sending and receiving data items via a wireless network 140.

Communication functions, including data and voice communications, are performed through the communication subsystem 100, and possibly through the short-range communication subsystem 102. Communication subsystem 100 includes receiver 150, transmitter 152 and one or more antennae, illustrated as receive antenna 154 and transmit antenna 156. In addition, communication subsystem 100 also includes processing module, such as digital signal processor (DSP) 158 and local oscillators (LOs) 160. The specific design and implementation of communication subsystem 100 is dependent upon the communication network in which device 10 is intended to operate. For example, communication subsystem 100 of the device 10 may be designed to operate with the Mobitex (trade-mark), DataTAC (trade-mark) or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA) Personal Communication Service (PCS), Global System for Mobile Communication (GSM), etc. Other types of data and voice networks, both separate and integrated, may also be utilized with device 10. It will be appreciated that some signals received and transmitted through the subsystem 100 may provide interfering signals with other components in device 10, such as microphone 112.

Network access requirements vary depending upon the type of communication system which can communicate with device 10. For example, in the Mobitex (trade-mark) and DataTAC (trade-mark) networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, device 10 may send and receive communication signals over communication network 140. Signals received from communication network 140 by the receive antenna 154 are routed to receiver 150, which provides for signal amplification, frequency down conversion, filtering, channel selection, etc., and may also provide analog to digital conversion. Analog-to-digital conversion of received signals allows the DSP 158 to perform more complex communication functions, such as signal demodulation and decoding. In a similar manner, signals to be transmitted to network 140 are processed (e.g., modulated and encoded) by DSP 158 and are then provided to transmitter 152 for digital to analog conversion, frequency up conversion, filtering, amplification and transmission to communication network 140 (or networks) via the transmit antenna 156.

In addition to processing communication signals, DSP 158 provides for control of receiver 150 and transmitter 152. For example, gains applied to communication signals in receiver 150 and transmitter 152 may be adaptively controlled through automatic gain control algorithms implemented in DSP 158.

In a data communication mode, a received signal, such as a text message or web page download, is processed by the communication subsystem 100 and is input to microprocessor 18. The received signal is then further processed by microprocessor 18 for an output to the display 16, or alternatively to some other auxiliary I/O devices 106. A device user may also compose data items, such as e-mail messages, using keyboard (keypad) 14A, thumb-wheel 14B and/or some other auxiliary I/O device 106, such as a touchpad, a rocker switch or some other type of input device. The composed data items may then be transmitted over communication network 140 via communication subsystem 100.

In a voice communication mode, overall operation of device 10 is substantially similar to the data communication mode, except that received signals are output to speaker 110, and received audio signals are provided to microphone 112 for further conversion into an electrical signal and further processing by device 10. Microphone 112 is preferably a silicon-based transducer which can be mounted to PCB 104 (shown in Fig. 2).

Short-range communication subsystem 102 enables communication between device 10 and other proximate systems or devices, which need not necessarily be similar devices. For example, the short-range communication subsystem may include an infrared device and associated circuits and components, or a Bluetooth (trade-mark) communication module to provide for communication with similarly-enabled systems and devices.

Powering the entire electronics of the mobile handheld communication device is power source 170. Preferably, the power source 170 includes one or more batteries. More preferably, the power source 170 is a single battery pack, especially a rechargeable battery pack. Power switch 172 provides a separate on/off switch for device 10.

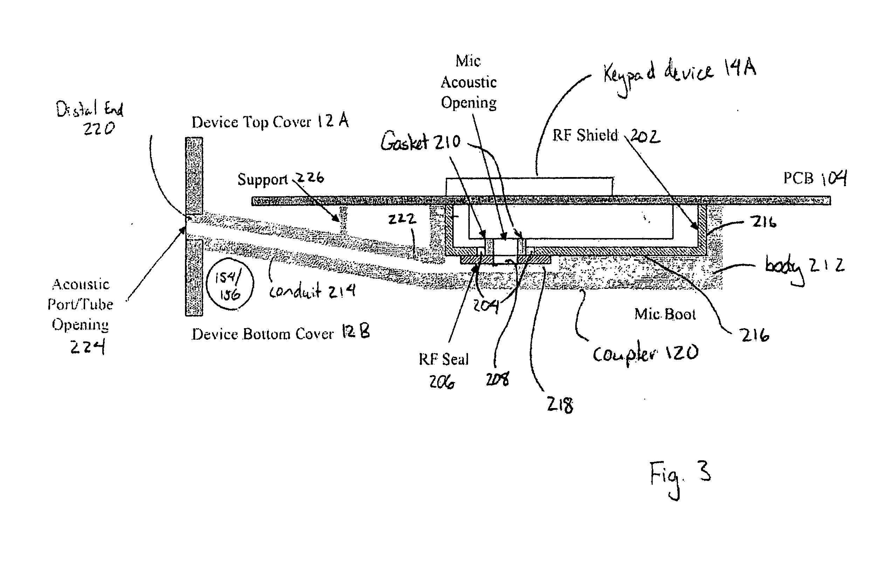

Referring to Figs. 2 and 3, further detail is provided on aspects of housing 12 and internal devices of device 10. First, PCB 104 provides a substrate for mounting and supporting the internal devices on both of its top and bottom sides and provides some electrical circuitry for the devices, as defined by etchings within the layers of plastic and copper. As such, devices can be more densely packed thereon, thereby reducing the size of PCB 104. PCB 104 is securely mountable within housing 12, typically via screws. PCB 104 is a generally planar sandwich of layers of plastic (or FR4) and copper.

Certain physical and operational restrictions may affect the location of devices on PCB 104 and to their placement on a particular side thereof. For example, a conventional industrial exterior design of device 10 has keypads on its top surface, thereby requiring that the electrical components relating to the keypad be placed on the top side of PCB 104. Similarly, microphone 112 can be sensitive to interference signals from antenna 154 and 156 and display 16. As such, it is preferable to locate microphone 112 as far away as possible from such devices. In one design layout, at least one of antennae 154 and 156 is located on the bottom side of circuit board 104 in the bottom part of device 10. To assist in isolating microphone 112 from interference from such antennae 154 and 156, microphone 112 is located in a central region of PCB 104. However, since one or more elements of keypad 14A (e.g. dome and contact elements) is located on the top side of the central region of PCB 104, microphone 112 is located on the bottom side of the central region of PCB 104. This positioning also provides more efficient use of the total available surface area of PCB 104.

To further assist in shielding microphone 112, radio frequency (RF) shield can 202 is provided to cover microphone 112 on PCB 104. Shield can 202 provides a Faraday shield to isolate microphone 112 from electromagnetic interference. Such interference may originate from signals received and generated by either antenna 154 or 156. Shield can 202 has aperture 204 therein to allow audio signals entering opening 224 to ultimately enter shield can 202 and be provided to microphone 112. Aperture 204 is covered in part by RF seal 206 which is a shaped, flat piece, larger than aperture 204. Seal 206 has an aperture 208 located therein. RF seal 206 is located over aperture 204, with aperture 208 aligned with aperture 204, thereby defining an opening in RF shield can 202. Shield can 202 and RF seal 206 are preferably made of metal and are shaped to completely enclose microphone 112, but for aperture 204, when microphone 112 is mounted onto PCB 104. Shield can 202 is oblong in shape, but any suitable shape may be used. RF seal 206 is fixed to shield can 202 by an appropriate fixative, such as double sided tape, adhesive or weld. Alternate embodiments may dispense with having a shield can.

Gasket 210 is an annular ring and is dimensioned to fit within aperture 204 and is comprised of a compressible material and to rest against the acoustic receiving part (e.g. the microphone opening) of microphone 112. Gasket 210 provides an acoustic conduit for audio signals received at aperture 208, allowing such signals to reach microphone 112. In the embodiment, it is compressible by approximately 40%. Seal 206 is positioned such that its upper end rests against gasket 210 and its lower end extends downward to the top surface of the bottom of shield can 202. Other materials may be used if other compression characteristics are required. Alternate embodiments may dispense with having a gasket. Aperture 204 is dimensioned to be able to accommodate gasket 210 within and still provide an appropriate RF shield for microphone 112 when seal 206 is in electrical and physical contact with can 202. It is not necessary that aperture 204 provides a tight fit around gasket 210.

In the embodiment, microphone 112 and shield can 202 are components which can be surface mounted to PCB 104. However, during an SMT soldering process, there may be difficulties in simultaneously mounting can 202 and gasket 210 to PCB 104. As such, shield can 202 is provided with aperture 204. In a second stage of assembly of components onto PCB 104 following the SMT process, gasket 210 is inserted in place and RF seal 206 is placed and fixed over aperture 204.

Microphone coupler 120 is a shaped body which encloses RF shield can 202 and provides another acoustic conduit to carry audio signals from external sources around device 10 to aperture 208 (and ultimately again, to microphone 112). Coupler 120 comprises a body section 212 and a conduit 214. Body section 212 is defined by a series of walls and within the walls an interior cavity 216 is defined and shaped to provide a snug fit around a part (or even all) of RF shield can 202. Interior cavity 216 defines air space 218 immediately below aperture 208 to enable audio signals to traverse to aperture 208. Conduit 214 is generally an elongated tube having distal end 220, proximal end 222 and openings at each end. Distal end 220 mates with opening 224 in housing 12. Proximal end and its opening mates with a port in one of the walls of body section 212. One purpose of conduit 214 is to provide an acoustic chamber to connect microphone 112 to opening 224 to allow microphone 112 to receive audio signals arriving at the opening with minimal (or tolerable) loss in the strength of the audio signals. The opening at proximal end 222 connects with interior cavity 218. As such, a continual air channel is provided from outside of the device to opening 224 through conduit 214, then through interior cavity 218, then through apertures 204 and 208 and finally to microphone 112. One embodiment has conduit 214 having a length of between approximately 10 to 15 mm and the cross-sectional area of the conduit being approximately 4 mm². Other cross sectional dimensions can be approximately I mm x 3 mm. Other shapes for the cross section may also be provided. Other longer and shorter lengths and cross-sectional dimensions may be used. In the embodiment, the acoustic chamber defined by conduit 214 passes through a volume of space in which one or more of antennae 154 and 156 are located. As such, if an antenna or another device which interferes with the operation of microphone 112 is placed in a volume of space which audio signals must pass through to reach microphone 112 from opening 224, conduit 214 provides at least two functions. First, conduit 214 allows microphone 112 to be placed in a spaced relationship to the antenna (or other device) such that the interference caused by the antenna (or other device) is reduced to a tolerable level. Second conduit 214 carries such audio signals to microphone 112.

Support 226 is generally a beam and extends upwardly from conduit 214 to contact PCB 104, thereby providing a brace for conduit 214 to PCB 104. The specific location of support 226 on conduit 214 may be in any suitable location. Further the specific contact point on PCB 104 may also be any suitable location thereon. Further still, the shape and dimensions of support 226 may be almost defined to meet any requirements or limitations, including structural, spacing, support and material requirements. Coupler 120 may be mounted to PCB 104 using a fixative, such as double sided adhesive tape or an adhesive. It will be appreciated that with coupler 120, microphone 112 may be placed in more locations within device 10 (e.g. more locations which are further away from signal interfering sources, such as antenna 154 and 156 and display 16) and while providing a channel to allow audio signals to be carried from microphone opening 224 in housing 12 to the microphone without serious degradation in signal strength. In other embodiments, support 226 may not be required or other structural supports to other interior locations within housing 12 may be provided.

In one embodiment body section 212 and conduit 214 are formed as a single unit. In other embodiments, conduit 214 is attachable to body section 212 through an appropriate means, including a friction fit, a fixative (such as tape or glue), a weld, a thread and screw mechanism, a "snap" fit or other connection mechanisms known in the art.

Also, other shapes and dimensions for components of coupler 120 may be used in other embodiments. Still further, coupler 120 may be shaped to provide a snug fit around shield can 202 thereby reducing the need for fixing coupler 120 to PCB 104. The physical profile of coupler 120 may be designed such that bends and turns taken by any audio signals passing through coupler 120 are not degraded to an extent where the signals are not strong enough for microphone 112 to operate effectively.

Preferably coupler 120 is made of an elastic, plastic or a flexible material, such as rubber, silicone or urethane. Alternatively, coupler 120 may be formed in part or in whole by any one or a combination of structures formed in PCB 104, housing 12, upper housing 12A and lower housing 12B. Conduit 214 is shaped, sized and angled to mate with an opening (or port) in a wall of coupler 120 which connects to interior cavity 218. As shown, conduit 214 extends slightly upwardly from the lower region of body section 222 upwardly to opening 224. In other embodiments, opening 224 may be located on the top, side or bottom of housing 12. For example, if opening 224 were located more towards the rear of the bottom of housing 12 (as is shown), then conduit 214 extends directly downward from body section 222 to the location of opening 224.

It will be appreciated that in other embodiments, the location of the components for the microphone 112 and coupler 120 may be placed on the top side of PCB 104. Also, depending on the location of antennae 154 and 156, the shape of body section 212 and conduit 214 may be designed to accommodate physical, material and signal isolation requirements to meet the environment of the locations of the relevant components. For example, in another embodiment, shield can 202 and seal 206 may not be used and coupler 120 forms a fit around microphone 112 alone. The fit may be a tight fit.

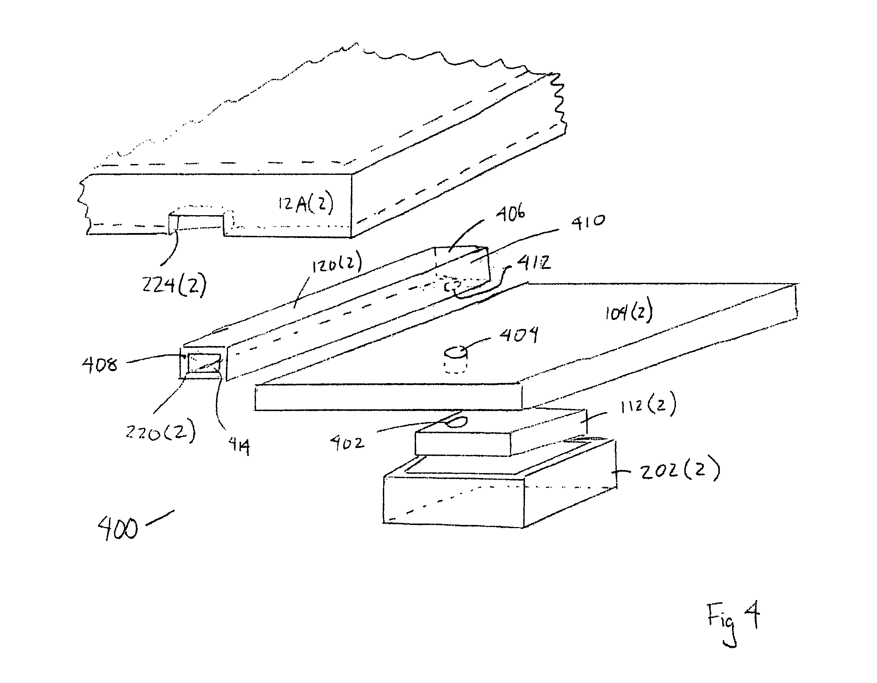

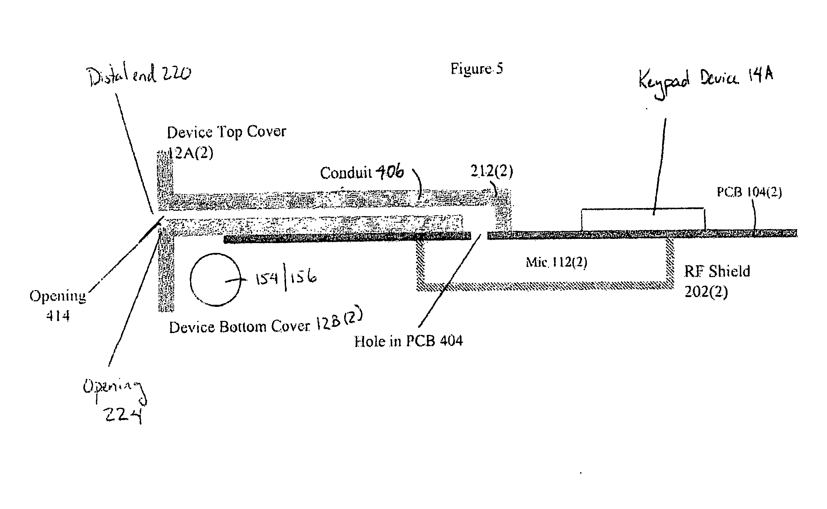

Referring to Figs. 4 and 5 another embodiment is shown. As there are similarities between selected components in Figs. 4 and 5 and components in Figs. 2 and 3, where a like component is shown in Figs. 4 and 5, its reference numeral is the same as provided in Figs. 2 and 3, but a (2) suffix is added.

In Figs. 4 and 5, view 400 provides an exploded view of elements of another embodiment. Therein, microphone 112(2) is a "zero height" microphone. An exemplary zero-height microphone is an SMT device and is available from Knowles Acoustics of Itasca, IL, U.S.A. In this implementation, microphone 112(2) receives audio signals to microphone port 402 which is on the surface mount side (i.e. the underside) of microphone 112(2). As such, in order to provide access for audio signals to reach the acoustic port of microphone 112(2), opening 404 is provided through PCB 104(2) which provides a channel from the top side to the bottom side of PCB 104(2). Opening 404 is located on PCB 104(2) where the acoustic port 402 of microphone 112(2) will be located when permanently mounted to PCB 104(2). Opening 404 may be formed as a via opening and may be lined or not.

To further assist in shielding microphone 112(2), radio frequency (RF) shield can 202(2) is provided to cover microphone 112(2) on PCB 104(2). Shield can 202(2) provides a Faraday shield to isolate microphone 112(2) from electromagnetic interference. Such interference may originate from signals received and generated by either antenna 154 or 156. Here, shield can 202(2) is preferably made of metal and is shaped to completely enclose microphone 112(2) when microphone 112(2) is mounted onto PCB 104(2). Shield can 202(2) is oblong in shape, but any suitable shape may be used. Alternate embodiments may dispense with having a shield can. In the embodiment, microphone 112(2) and shield can 202(2) are components which can be surface mounted to PCB 104(2).

Coupler 120(2) comprises conduit 406. Conduit 406 is generally an elongated tube having distal end 408, proximal end 410 and openings at each end (414 and 412). Distal end 408 mates with opening 224(2) in housing 12. Proximal end 410 has opening 412 on its bottom side which mates with opening 404. One purpose of opening 404 is to provide an acoustic chamber to connect microphone 112(2) to opening 412 to allow microphone 112(2) to receive audio signals arriving at the opening with minimal (or tolerable) loss in the strength of the audio signals. As such, a continual air channel is provided from outside of the device to opening 414, through conduit 406, through opening 412 and opening 404 and finally to microphone 112(2). One embodiment has conduit 406 having a length of between approximately 10 to 15 mm. Its interior cross section dimensions may be similar to dimensions noted earlier. Other longer and shorter lengths may be used. In the embodiment, the acoustic chamber defined by conduit 406 passes through a volume of space in which one or more of antennae 154 and 156 are located. As such, if an antenna or another device which interferes with the operation of microphone 112(2) is placed in a volume of space which audio signals must pass through to reach microphone 112(2) from opening 224(2), conduit 406 provides at least two functions. First, conduit 406 allows microphone 112(2) to be placed in a spaced relationship to the antenna (or other device) such that the interference caused by the antenna (or other device) is reduced to a tolerable level.

Coupler 120(2) may be mounted to PCB 104(2) using a fixative, such as double sided adhesive tape or an adhesive. It will be appreciated that with coupler 120(2), microphone 112(2) may be placed in more locations within device 10 (e.g. more locations which are further away from signal interfering sources, such as antenna 154 and 156 and display 16) and while providing a channel to allow audio signals to be carried from microphone opening 224(2) in housing 12 to the microphone without serious degradation in signal strength.

In one embodiment conduit 406 is formed as a single unit. In other embodiments, conduit 406 may be formed in part or in total by one or more of housing 12 and PCB 104(2). Conduit 406 is attachable to PCB 104(2) through an appropriate means, including a friction fit, a fixative (such as tape or glue), a weld, a "snap" fit or other connection mechanisms known in the art.

Also, other shapes and dimensions for coupler 120(2) may be used in other embodiments. Still further, coupler 120(2) may be shaped to provide a snug fit around other components on its path on PCB 104(2). The physical profile of coupler 120(2) may be designed such that bends and turns taken by any audio signals passing through coupler 120(2) are not degraded to an extent where the signals are not strong enough for microphone 112(2) to operate effectively.

Preferably coupler 120(2) is made of an elastic, plastic or a flexible material, such as rubber, silicone or urethane. Conduit 406 is shaped, sized and angled to mate with an opening 404 (or another port) in circuit board 104(2). In other embodiments, opening 224(2) may be located on the top, side or bottom of housing 12. For example, if opening 224(2) were located more towards the rear of the bottom of housing 12 (as is shown), then conduit 406 may either extend past PCB 104(2) then extend directly to the location of opening 224(2) or through PCB 104(2) through an appropriate opening and then towards opening 224(2).

In other embodiments, depending on the location of port 402, coupler 120(2) may be located on a same side of PCB 104(2) as microphone 112(2) (top or bottom). Also, depending on the location of antennae 154 and 156, the shape of conduit 406 may be designed to accommodate physical, material and signal isolation requirements to meet the environment of the locations of the relevant components. For example, in another embodiment, shield can 202(2) may not be used.

Although the invention has been described with reference to certain specific embodiments, various modifications thereof will be apparent to those skilled in the art without departing from the scope of the invention as outlined in the claims appended hereto.

## Claims

1. A microphone coupler (120) for a radio frequency (RF) shielded microphone (112) located within a housing (12) of a voice communication device (10), said coupler (120) comprising:
a body section (212) having an interior cavity (216) for accommodating at least a portion of said microphone (112) and an RF shield (202) associated with said microphone, said body section having a port through a wall thereof, said port communicating with said interior cavity (216), said interior cavity (216) being in communication with an opening of said microphone (112) for receiving acoustic signals via an aperture (204) in said RF shield (202); and
a conduit (214) having an internal channel therein, a distal end (220), a proximal end (222), a first opening in said distal end connecting to said internal channel and
a second opening in said proximal end connecting to said internal channel,
wherein
said proximal end of said conduit is connected to said body section with said second opening being in communication with said port;
said distal end extending towards a microphone opening (224) in said housing; and
said conduit (214) and said body section (212) are formed as a single piece.

2. The microphone coupler (120) as claimed in claim 1, wherein said conduit (214) has a longitudinal length of between 10 mm and 15 mm.

3. The microphone coupler (120) as claimed in any one of claims 1 to 2, wherein a support member (226) is connected to said conduit (214) and is attachable to a location within said housing (12) to provide a brace for said conduit.

4. The microphone coupler (120) as claimed in any one of claims 1 to 3, wherein said body section (212) and said conduit (214) are comprised of a plastic, elastic or flexible material.

5. A microphone coupler system for a communication device (10), said coupler system comprising:
a printed circuit board (PCB) (104; 104(2));
a microphone (112; 112(2)) located on said PCB (104; 104(2)), said microphone having an opening to receive acoustic signals;
an antenna (154, 156) for processing wireless communications handled by said device;
a radio frequency (RF) shield can (202; 202(2)) locatable over said microphone (112; 112(2)) on said PCB (104; 104(2)) for isolating said microphone from interference caused from signals associated with said antenna; and
a microphone coupler (120) for shielding said microphone (112) from radio frequency (RF) signals as claimed in any of claims 1 to 4.

6. The microphone coupler system as claimed in claim 5, further comprising:
a gasket (210) located between said opening of said microphone (112) and said RF shield can (202).

7. The microphone coupler system as claimed claim 6, further comprising
an RF seal (206) having an opening (208) therethrough, said RF seal (206) covering said aperture (204) of said RF shield can (202) and holding said gasket (210) in place about said opening of said microphone (112).

8. The microphone coupler system as claimed in any one of claims 5 to 7, wherein a support member (226) is connected to said conduit (214) and is attachable to a location within said PCB (104) to provide a brace for said conduit.

9. The microphone coupler system as claimed in claim 5, wherein
said PCB (104(2)) comprises a microphone hole (404) spanning from one side of said PCB to an opposite side of said PCB,
said microphone (112(2)) and said RF shield can (202(2)) are located on said one side of said PCB;
said opening on said microphone (112) is positioned to face said PCB about said microphone hole (404); and
said conduit (406) is located on said other side of said PCB and said proximal end (410) of said conduit is in communication with said microphone hole (404) on said PCB.

10. A communication device (10) incorporating the microphone coupler of any one of claims 1 to 4.

11. A communication device (10) incorporating the microphone coupler system of any one of claims 5 to 9.

12. The communication device (10) as claimed in claim 11, wherein said antenna (154, 156) is located in a lower portion of said device and said conduit (214; 406) spans said antenna (154 or 156).

13. The communication device as claimed in claim 11 or claim 12, wherein keypad devices (14A) are located on an opposite side of said PCB (104) to said microphone (112).

14. The communication device as claimed in any one of claims 11 to 13, wherein said conduit is formed in part by at least one of:
said PCB; and
a housing of said communication device.

15. The communication device as claimed in any one of claims 11 to 14, wherein said conduit is attached to said PCB.

16. The microphone coupler system of any one of claims 5 to 9, wherein said RF shield can is oblong in shape.

## Patentansprüche

1. Mikrofonkoppler (120) für ein hochfrequenz-(HF-)abgeschirmtes Mikrofon (112), das sich in einem Gehäuse (12) eines Sprachkommunikationsgeräts (10) befindet, wobei der Koppler (120) Folgendes umfasst:
einen Körperabschnitt (212) mit einem inneren Hohlraum (216) zur Unterbringung mindestens eines Teilbereichs des Mikrofons (112) und eines HF-Schirms (202), der mit dem Mikrofon verbunden ist, wobei der Körperabschnitt eine Durchgangsöffnung durch eine Wand davon aufweist, wobei die Durchgangsöffnung in Verbindung mit dem inneren Hohlraum (216) ist, der innere Hohlraum (216) in Verbindung mit einer Öffnung des Mikrofons (112) zum Empfangen akustischer Signale über eine Apertur (204) im HF-Schirm (202) ist; und
eine Leitung (214) mit einem internen Kanal darin, einem distalen Ende (220), einem proximalen Ende (222), wobei eine erste Öffnung im distalen Ende sich mit dem internen Kanal verbindet und eine zweite Öffnung im proximalen Ende sich mit dem internen Kanal verbindet,
wobei
das proximale Ende der Leitung an den Körperabschnitt angeschlossen ist, die zweite Öffnung in Verbindung mit der Durchgangsöffnung ist;
sich das distale Ende zu einer Mikrofonöffnung (224) im Gehäuse hin erstreckt; und die Leitung (214) und der Körperabschnitt (212) einstückig ausgebildet sind.

2. Mikrofonkoppler (120) nach Anspruch 1, wobei die Leitung (214) eine Länge in Längsrichtung von zwischen 10 mm und 15 mm aufweist.

3. Mikrofonkoppler (120) nach einem der Ansprüche 1 bis 2, wobei ein Unterstützungsbauteil (226) an die Leitung (214) angeschlossen ist und an einer Stelle in dem Gehäuse (12) anbringbar ist, um für die Leitung eine Stütze bereitzustellen.

4. Mikrofonkoppler (120) nach einem der Ansprüche 1 bis 3, wobei der Körperabschnitt (212) und die Leitung (214) aus einem Kunststoff-, elastischen oder biegsamen Werkstoff bestehen.

5. Mikrofonkopplersystem für ein Kommunikationsgerät (10), wobei das Kopplersystem Folgendes umfasst:
eine gedruckte Leiterplatte (104; 104(2));
ein Mikrofon (112; 112(2)), das sich auf der gedruckten Leiterplatte (104; 104(2)) befindet, wobei das Mikrofon eine Öffnung zum Empfang akustischer Signale aufweist;
eine Antenne (154, 156) zur Verarbeitung drahtloser vom Gerät bearbeiteter Kommunikationen;
einen Hochfrequenz-(HF-)Schirm (202; 202(2)), der über dem Mikrofon (112; 112(2)) auf der gedruckten Leiterplatte (104; 104(2)) angeordnet werden kann, um das Mikrofon vor einer Störung zu isolieren, die von mit der Antenne verbundenen Signalen verursacht wird; und
einen Mikrofonkoppler (120) zum Abschirmen des Mikrofons (112) vor Hochfrequenz-(HF-)Signalen nach einem der Ansprüche 1 bis 4.

6. Mikrofonkopplersystem nach Anspruch 5, das des Weiteren Folgendes umfasst: eine Dichtung (210), die sich zwischen der Öffnung des Mikrofons (112) und dem HF-Schirm (202) befindet.

7. Mikrofonkopplersystem nach Anspruch 6, das des Weiteren eine HF-Abdichtungsvorrichtung (206) mit einer Öffnung (208) **dadurch** umfasst, wobei die HF-Abdichtungsvorrichtung (206) die Apertur (204) des HF-Schirms (202) abdeckt und die Dichtung (210) in der Position um die Öffnung des Mikrofons (112) hält.

8. Mikrofonkopplersystem nach einem der Ansprüche 5 bis 7, wobei ein Unterstützungsbauteil (226) an die Leitung (214) angeschlossen ist und an einer Stelle in der gedruckten Leiterplatte (104) anbringbar ist, um für die Leitung eine Stütze bereitzustellen.

9. Mikrofonkopplersystem nach Anspruch 5, wobei
die gedruckte Leiterplatte (104(2)) ein Mikrofonloch (404) umfasst, das sich von einer Seite der gedruckten Leiterplatte bis zur gegenüberliegenden Seite der gedruckten Leiterplatte erstreckt,
sich das Mikrofon (112(2)) und der HF-Schirm (202(2)) auf der einen Seite der gedruckten Leiterplatte befinden;
die Öffnung am Mikrofon (112) positioniert ist, um der gedruckten Leiterplatte um das Mikrofonloch (404) gegenüber zu liegen; und
die Leitung (406) sich an der anderen Seite der gedruckten Leiterplatte befindet und das proximale Ende (410) der Leitung in Verbindung mit dem Mikrofonloch (404) auf der gedruckten Leiterplatte ist.

10. Kommunikationsgerät (10), das den Mikrofonkoppler eines der Ansprüche 1 bis 4 umfasst.

11. Kommunikationsgerät (10), das das Mikrofonkopplersystem eines der Ansprüche 5 bis 9 umfasst.

12. Kommunikationsgerät (10) nach Anspruch 11, wobei die Antenne (154, 156) sich in einem unteren Teilbereich des Geräts befindet und die Leitung (214; 406) sich über der Antenne (154 oder 156) erstreckt.

13. Kommunikationsgerät nach Anspruch 11 oder Anspruch 12, wobei sich die Tastaturfeldvorrichtungen (14A) an einer gegenüberliegenden Seite der gedruckten Leiterplatte (104) zum Mikrofon (112) befinden.

14. Kommunikationsgerät nach einem der Ansprüche 11 bis 13, wobei die Leitung teilweise aus mindestem einem
der gedruckten Leiterplatte; und
einem Gehäuse des Kommunikationsgeräts
besteht.

15. Kommunkationsgerät nach einem der Ansprüche 11 bis 14, wobei die Leitung an der gedruckten Leiterplatte befestigt ist.

16. Mikrofonkopplersystem nach einem der Ansprüche 5 bis 9, wobei der HF-Schirm länglich geformt ist.

## Revendications

1. Coupleur (120) de microphone pour microphone (112) protégé contre les radiofréquences (RF) placé à l'intérieur d'un logement (12) de dispositif de communication vocale (10), ledit coupleur (120) comprenant :
une section de corps (212) possédant une cavité intérieure (216) pour héberger au moins une partie dudit microphone (112) et un bouclier RF (202) associé audit microphone, ladite section de corps possédant un orifice au travers d'une paroi de celui-ci, ledit orifice communiquant avec ladite cavité intérieure (216), ladite cavité intérieure (216) étant en communication avec une ouverture dudit microphone (112) pour recevoir des signaux acoustiques via un accès (204) dans ledit bouclier RF (202) ; et
un conduit (214) ayant un canal interne à l'intérieur, une extrémité distale (220), une extrémité proximale (222), une première ouverture dans ladite extrémité distale se connectant audit canal interne et une deuxième ouverture dans ladite extrémité proximale se connectant audit canal interne,
dans lequel :
ladite extrémité proximale dudit conduit est connectée à ladite section de corps avec ladite deuxième ouverture en communication avec ledit orifice ;
ladite extrémité distale se prolonge vers une ouverture (224) de microphone dans ledit logement ; et ledit conduit (214) et ladite section de corps (212) sont formées en une seule pièce.

2. Coupleur (120) de microphone tel que revendiqué à la revendication 1, dans lequel ledit conduit (214) présente une longueur longitudinale comprise entre 10 et 15 mm.

3. Coupleur (120) de microphone tel que revendiqué dans l'une quelconque des revendications 1 à 2, dans lequel un organe de support (226) est connecté audit conduit (214) et peut être fixé à un endroit à l'intérieur dudit logement (12) pour assurer un ancrage pour ledit conduit.

4. Coupleur (120) de microphone tel que revendiqué dans l'une quelconque des revendications 1 à 3, dans lequel ladite section de corps (212) et ledit conduit (214) sont réalisés en matériau plastique, élastique ou flexible.

5. Système de coupleur de microphone pour un dispositif de communication (10), ledit système de coupleur comprenant :
une carte à circuit imprimé (104 ; 104(2)) ;
un microphone (112; 112(2)) situé sur ladite carte à circuit imprimé (104; 104(2)), ledit microphone ayant une ouverture pour recevoir des signaux acoustiques ;
une antenne (154, 156) pour traiter les communications sans fil prises en charge par ledit dispositif ;
un bouclier radiofréquence (RF) (202; 202(2)) pouvant être placé sur ledit microphone (112; 112(2)) sur ladite carte de circuit imprimé (104; 104(2)) afin d'isoler ledit microphone des interférences occasionnées par les signaux associés à ladite antenne ; et
un coupleur (120) de microphone pour protéger ledit microphone (112) des signaux radiofréquence (RF) ainsi que revendiqué dans l'une quelconque des revendications 1 à 4.

6. Système de coupleur de microphone tel que revendiqué à la revendication 5, comportant en outre un joint (210) situé entre ladite ouverture dudit microphone (112) et ledit bouclier RF (202).

7. Système de coupleur de microphone tel que revendiqué à la revendication 6, comprenant en outre un joint RF (206) présentant une ouverture (208) au travers de celui-ci, ledit joint RF (206) couvrant ladite ouverture (204) dudit bouclier RF (202) et immobilisant ledit joint (210) autour de ladite ouverture dudit microphone (112).

8. Système de coupleur de microphone tel que revendiqué dans l'une quelconque des revendications 5 à 7, dans lequel un organe de support (226) est connecté audit conduit (214) et peut être fixé à un endroit à l'intérieur de ladite carte de circuit imprimé (104) pour assurer un ancrage dudit conduit.

9. Système de coupleur de microphone tel que revendiqué à la revendication 5, dans lequel :
ladite carte de circuit imprimé (104(2)) comprend un trou de microphone (404) allant d'un côté à un côté opposé de ladite carte à circuit imprimé,
ledit microphone (112(2) et ledit bouclier RF (202(2)) sont situés dudit côté de ladite carte à circuit imprimé ;
ladite ouverture sur ledit microphone (112) est positionnée pour être face à ladite carte à circuit imprimé autour dudit trou de microphone (404) ; et
ledit conduit (406) est placé sur ledit autre côté de ladite carte à circuit imprimé et
ladite extrémité proximale (410) dudit conduit est en communication avec ledit trou de microphone (404) sur ladite carte à circuit imprimé.

10. Dispositif de communication (10) intégrant le coupleur de microphone de l'une quelconque des revendications 1 à 4.

11. Dispositif de communication (10) intégrant le système de coupleur de microphone de l'une quelconque des revendications 5 à 9.

12. Dispositif de communication (10) tel que revendiqué à la revendication 11, dans lequel ladite antenne (154, 156) se trouve dans une partie inférieure dudit dispositif et ledit conduit (214; 406) s'étend sur ladite antenne (154 ou 156).

13. Dispositif de communication tel que revendiqué dans les revendications 11 ou 12, dans lequel des dispositifs de pavé de touches (14A) sont placés sur un côté opposé de ladite carte à circuit imprimé (104) par rapport audit microphone (112).

14. Dispositif de communication tel que revendiqué dans l'une quelconque des revendications 11 à 13, dans lequel ledit conduit est formé partiellement par au moins l'un des éléments suivants :
ladite carte à circuit imprimé ; et
un logement dudit dispositif de communication.

15. Dispositif de communication tel que revendiqué dans l'une quelconque des revendications 11 à 14, dans lequel ledit conduit est relié à ladite carte à circuit imprimé.

16. Système de coupleur de microphone tel que revendiqué dans l'une quelconque des revendications 5 à 9, dans lequel ledit boîtier de bouclier RF peut être de forme oblongue.
